# DEMANDE DE BREVET EUROPEEN

(11) **EP 4 454 940 A1**
(43) Date de publication de la demande: **30.10.2024**
(21) Numéro de dépôt: 24172523.3
(22) Date de dépôt: 25.04.2024
(51) Int. Cl.: B60N 2/02, B60N 2/14, B60N 2/20, B60N 2/22, B60N 2/34, B60N 2/68, B60N 2/806

(54) **SIEGE A DOSSIER BASCULANT**

(30) Priorité: 25.04.2023 FR 2304134; 31.05.2023 FR 2305397
(71) Demandeur: Renault s.a.s, 92100 Boulogne Billancourt (FR)
(72) Inventeur: DURON, Frederic, 78280 GUYANCOURT (FR); FRILEUX, Stéphane, 78280 GUYANCOURT (FR); VERDERA, Fabien, 78280 GUYANCOURT (FR)

(57) **Abrégé**

Siège (1) comportant :
- une assise (10) qui comprend une ossature et une garniture (12) ayant une face supérieure d'assise,
- des moyens de fixation de l'assise sur un plancher (9),
- un dossier (20), et
- des moyens de montage du dossier avec une mobilité de basculement par rapport à l'assise autour d'un axe de rotation (A1) qui est sensiblement parallèle au plancher et qui est situé à une hauteur (h1) par rapport au plancher qui est inférieure à la hauteur de la face supérieure de la garniture de l'assise par rapport au plancher.

## Description

### DOMAINE TECHNIQUE DE L'INVENTION

La présente invention concerne de manière générale l'habitabilité des véhicules automobiles.

Elle concerne plus particulièrement un siège comportant une assise et un dossier.

Elle concerne également un véhicule automobile comportant un tel siège.

### ETAT DE LA TECHNIQUE

Une voiture embarque en général au moins deux sièges, à savoir un siège conducteur et un siège passager.

Il est connu d'utiliser des sièges dont les dossiers peuvent basculer vers l'arrière et vers l'avant, afin de permettre aux occupants de régler l'inclinaison des dossiers pour leur assurer un bon confort de conduite.

Dans certains véhicules, ce basculement peut présenter une course suffisante pour que le dossier se retrouve presqu'à l'horizontal.

Ainsi, lorsque le véhicule est à l'arrêt, les occupants peuvent s'y allonger et s'assoupir ou s'endormir.

L'inconvénient d'un tel siège est que, en position couchée, le dossier se trouve à une hauteur supérieure à celle de l'assise. L'axe de basculement du dossier est en effet prévu à la jonction entre le dossier et l'assise, c'est-à-dire trop haut pour que le dossier puisse se placer dans le prolongement de l'assise.

L'inconvénient de ce siège est alors que lorsque le dossier est en position couchée vers l'arrière, la différence de hauteur entre le dossier et l'assise est désagréable pour l'occupant.

### PRESENTATION DE L'INVENTION

Afin de remédier à l'inconvénient précité de l'état de la technique, la présente invention propose de revoir entièrement l'architecture du siège de façon à pouvoir placer autrement l'articulation du dossier sur l'assise.

Plus particulièrement, on propose selon l'invention un siège comportant :
- une assise qui comprend une ossature et une garniture ayant une face supérieure d'assise,
- des moyens de fixation de l'assise sur un plancher,
- un dossier, et
- des moyens de montage du dossier sur l'assise, avec une mobilité de basculement par rapport à l'assise autour d'un axe de rotation qui est sensiblement parallèle au plancher et qui est situé à une hauteur par rapport au plancher qui est inférieure à la hauteur de la face
supérieure de la garniture de l'assise par rapport au plancher.

Ainsi, grâce à l'invention, le dossier, lorsqu'il est en position couchée, peut se placer dans le prolongement de l'assise, de sorte que la face avant de sa garniture se place à hauteur de la face supérieure de la garniture de l'assise (au moins au niveau de la jonction entre le dossier et l'assise).

D'autres caractéristiques avantageuses et non limitatives du siège conforme à l'invention, prises individuellement ou selon toutes les combinaisons techniquement possibles, sont les suivantes :
- l'ossature de l'assise forme un cadre et ledit axe de rotation est situé à l'intérieur dudit cadre ;
- lesdits moyens de montage comprennent un bras de liaison dont une extrémité est montée sur l'ossature de l'assise de façon à former une première articulation autour de l'axe de rotation ;
- ledit bras de liaison s'étend sur moins de la moitié de la largeur du dossier ;
- l'assise comporte une partie périphérique qui est équipée desdits moyens de fixation, et une partie centrale montée mobile en rotation par rapport à la partie périphérique, et sur laquelle est articulée le bras de liaison ;
- une partie de la garniture de l'assise appartenant à la partie périphérique est située autour de la partie centrale et est interrompue au niveau du bras de liaison ;
- ledit bras de liaison présente une extrémité qui est montée sur une ossature du dossier de façon à former une seconde articulation autour d'un axe de pivotement qui est distinct de l'axe de rotation et qui est préférentiellement parallèle audit axe de rotation ;
- ledit bras de liaison est télescopique ;
- il est prévu des moyens de blocage de la mobilité en basculement du dossier autour dudit axe de rotation, et des moyens de désactivation des moyens de blocage, qui comprennent un levier prévu sur le dossier ;
- lesdits moyens de blocage comportent deux cassettes fixées de part et d'autre du bras de liaison, qui comportent chacune un verrou mobile entre une position engagée dans un orifice prévu en correspondance dans l'ossature de l'assise et une position rétractée en dehors dudit orifice.

L'invention propose également un véhicule comprenant un tel siège fixé au plancher. Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique d'un siège conforme à l'invention, représenté dans deux configurations distinctes ;
[Fig. 2] est une vue schématique d'un premier mode de réalisation de l'ossature du siège de la figure 1 ;
[Fig. 3] est une vue schématique d'un second mode de réalisation de l'ossature du siège de la figure 1 ;
[Fig. 4] est une vue schématique de l'arrière du siège de la figure 1 ;
[Fig. 5] est une vue de détail de la zone V de la figure 3 ;
[Fig. 6] est une vue de détail de la zone VI de la figure 5.

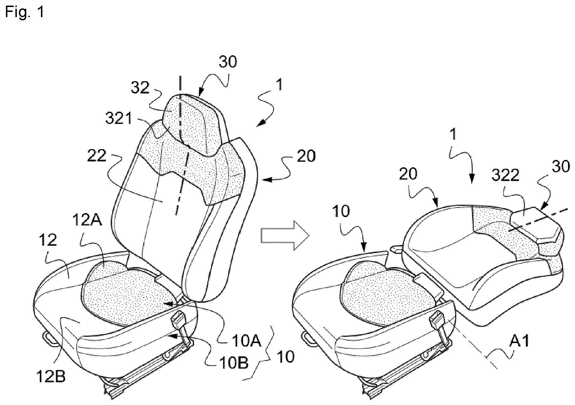

Sur la figure 1, on a représenté un siège 1 prévu pour être installé dans l'habitacle d'un véhicule automobile. Ce véhicule automobile pourrait être de tout type. Il pourrait typiquement s'agir d'un car, d'un camion, d'un wagon, d'un avion... Mais de préférence, il s'agira d'une voiture, l'habitacle d'une telle voiture ayant en effet un volume réduit auquel le siège 1 sera spécialement adapté.
[0001] On considérera ici que cette voiture comporte un poste de conduite (avec notamment un volant et une planche de bord), un siège conducteur situé en regard du poste de conduite, un siège passager situé à côté du siège conducteur, et de préférence un ou des sièges arrière (fauteuils et/ou banquette) situés à l'arrière des sièges conducteur et passager. Autrement formulé, les sièges sont ici répartis sur deux rangs situés l'un derrière l'autre.

Le siège 1 illustré sur la figure 1 appartient au rang avant : il s'agit du siège conducteur ou du siège passager.

Comme le montre la figure 1, ce siège 1 comporte plusieurs composants, dont notamment une assise 10, un dossier 20 et un appui-tête 30.

A titre liminaire, on notera que dans la description, les termes « avant » et « arrière » seront utilisés par rapport au véhicule automobile, la partie avant d'un élément désignant la partie de cet élément qui est située du côté du capot du véhicule et la partie arrière désignant la partie de cet élément qui est située du côté opposé.

Les termes « bas » et « haut » (ou inférieur et « supérieur ») seront utilisés de la même façon, la partie basse d'un élément désignant la partie de cet élément qui est située du côté du plancher du véhicule et la partie haute désignant la partie de cet élément qui est située du côté du toit du véhicule.

Un « axe longitudinal » sera un axe orienté de l'avant vers l'arrière du véhicule, parallèlement à la direction d'avance du véhicule lorsque le volant est en position neutre.

Un « axe transversal » sera un axe orthogonal aux axes longitudinaux, s'étendant à l'horizontal lorsque le véhicule se trouve situé sur une route horizontale.

Un « axe normal » sera un axe orthogonal aux axes précités, s'étendant à la verticale lorsque le véhicule se trouve situé sur une route horizontale.

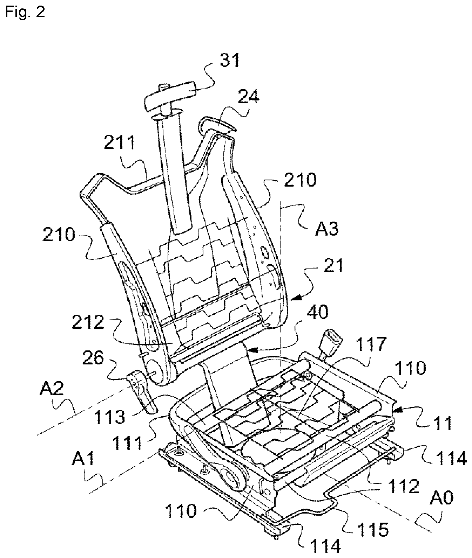

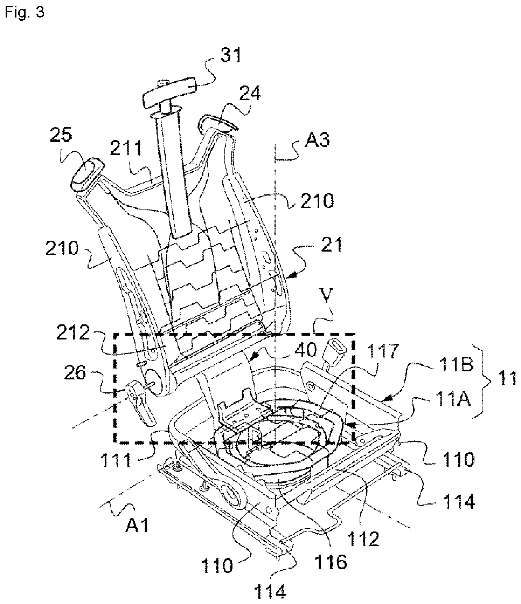

L'assise 10, le dossier 20 et l'appui-tête 30 comportent chacun au moins une ossature 11, 21, 31 (figures 2 et 3) sur laquelle est rapportée une garniture 12, 22, 32 (figure 1), typiquement une pièce de mousse qui a été expansée à la forme souhaitée.

Comme le montre la figure 1, le dossier 20 est ici monté basculant par rapport à l'assise 10 autour d'un axe transversal (ci-après appelé axe de rotation A1), de manière que le siège 1 peut être placé dans une configuration d'utilisation (dossier incliné de moins de 30° par rapport à la verticale) ou dans une configuration couchée (dossier placé dans le prolongement de l'assise). La configuration couchée est utilisée lorsque l'occupant du siège souhaite s'y reposer. La configuration d'utilisation est quant à elle plutôt utilisée lorsque le véhicule roule. On notera que les termes « avant », « arrière », « haut » et « bas » seront employés pour désigner des faces des composants du siège en considérant que ce dernier est en position d'utilisation, face à la route.

L'assise 10 peut se présenter sous des formes diverses. Sur les figures 2 et 3, on a par exemple représenté deux modes de réalisation de l'assise 10.

On notera que les éléments identiques ou similaires dans ces deux modes de réalisation seront, dans la mesure du possible, référencés par les mêmes signes de référence et ne seront pas décrits à chaque fois.

Dans le mode de réalisation de la figure 2, l'ossature 11 de l'assise 10 présente une forme de cadre à quatre branches structurelles, avec deux flancs 110 latéraux (formant deux premières branches) se présentant ici sous la forme de plaques sensiblement planes, orientées verticalement et longitudinalement, et des traverses qui relient les deux flancs. Il est notamment prévu une traverse arrière 111, une ou deux traverses avant 112, et une traverse intermédiaire 113 située entre la traverse arrière 111 et la (ou les) traverse(s) avant 112.

Le siège 1 est prévu pour pouvoir coulisser par rapport au plancher du véhicule automobile, de l'avant vers l'arrière (selon un axe longitudinal A0).

L'ossature 11 comporte pour cela deux glissières 114 formées chacune d'un rail mobile placé sous le bord inférieur de l'un des deux flancs 110 et d'un rail fixe comprenant des moyens de fixation au plancher du véhicule (il s'agit en l'espèce de moyens de vissage au plancher). Les rails mobiles sont alors conformés pour pouvoir coulisser librement dans les rails fixes. Il est en outre prévu des moyens de blocage du coulissement des rails mobiles par rapport aux rails fixes (il peut par exemple s'agir de crans portés par les rails mobiles et adaptés à s'engager dans des encoches des rails fixes), et des moyens de libération adaptés à actionner les moyens de blocage pour libérer le coulissement des rails mobiles par rapport aux rails fixes (ici, ces moyens de libération se présentent sous la forme d'un palonnier 115 manoeuvrable manuellement).

On notera ici que le siège est donc monté sur le plancher du véhicule selon un plan de fixation passant par les faces inférieures des rails fixes, lesquelles sont au contact du plancher. Ce plan de fixation est sensiblement horizontal (à 10 degrés près). On considérera alors que le plancher est plat, mais en variante, il pourrait présenter des reliefs. Dans ce cas, le plan général du plancher sera considéré confondu avec la plan de fixation précité.

Le siège 1 est en outre prévu pour pouvoir monter ou descendre par rapport au plancher du véhicule automobile (selon un axe normal A3).

L'ossature 11 comporte pour cela deux paires de bielles (non visibles) articulées chacune, d'un côté, sur l'un des rails mobiles et, de l'autre, sur l'un des deux flancs 110. Les flancs 110 peuvent ainsi présenter un mouvement conjoint de translation rotative autour de deux axes transversaux (ce qui lui permet de monter tout en reculant et en conservant son inclinaison). Il est en outre prévu des moyens de blocage du pivotement des bielles, et des moyens de libération adaptés à être manoeuvrés manuellement pour libérer le pivotement des bielles afin d'ajuster au besoin la hauteur de l'assise 10.

Dans ce premier mode de réalisation, la garniture de l'assise 10 est de préférence réalisée d'une seule pièce.

Sur la figure 3, on a représenté un second mode de réalisation de l'ossature 11 de l'assise 10 du siège 1, dans lequel ce dernier bénéficie des différentes mobilités décrites ci-dessus (coulissement de l'assise & ajustement de la hauteur de l'assise), ainsi que d'une mobilité supplémentaire. En l'espèce, cette mobilité supplémentaire permet à l'usager de faire pivoter son siège autour d'un axe vertical.

Dans ce second mode de réalisation, l'assise 10 diffère alors de celle décrite supra en ce sens qu'elle comporte deux parties distinctes, à savoir une partie périphérique 10B fixée au plancher du véhicule, et une partie centrale 10A (voir figure 1) montée mobile en rotation par rapport à la partie périphérique 10B, au centre de celle-ci.

Dans ce second mode de réalisation, la partie centrale de l'assise et le dossier sont ainsi prévus pour pivoter autour de l'axe normal A3, de façon à ce que l'occupant puisse s'asseoir face à la route, qu'il puisse pivoter son siège de 90° pour se retrouver face à la portière (ce qui facilite son entrée et sa sortie du véhicule), voire qu'il puisse également retourner complètement le siège pour s'asseoir dos à la route (et face aux passagers arrière).

Pour cela, l'ossature 11 et la garniture 12 de l'assise 10 sont chacune réalisées en deux parties distinctes, dites centrales et périphériques.

Comme le montre la figure 1, la partie périphérique 12B de la garniture 12 de l'assise 10 présente un bord extérieur de forme rectangulaire (aux coins arrondis) et une ouverture centrale de forme identique, en négatif, à celle de la partie centrale 12A de la garniture 12. Cette dernière présente quant à elle un bord extérieur de forme circulaire. Ainsi, la garniture 12 de l'assise 10 présente extérieurement une forme standard, à ceci-près qu'elle est formée en deux parties.

Comme le montre la figure 3, la partie périphérique 11B de l'ossature 11 de l'assise 10 est presqu'identique à l'ossature 11 illustrée sur la figure 2. Elle diffère de celle-ci en ce qu'elle est dépourvue de traverse intermédiaire (113) et en ce qu'elle comporte un support tubulaire 116 qui est fixé aux flancs 110, entre ceux-ci, en position centrale. Ce support tubulaire 116 présente une face externe cylindrique de révolution autour de l'axe normal A3.

La partie centrale 11A de l'ossature 11 de l'assise 10 comporte quant à elle une embase 117 ici formée par un tube replié de façon à former une sorte d'anneau dans un plan horizontal, autour de l'axe normal A3.

Il est en outre prévu des moyens de montage de l'embase 117 sur le support tubulaire 116, permettant à ces deux éléments de pivoter l'un par rapport à l'autre autour de l'axe normal A3.

De manière préférentielle, le pivotement est combiné à une translation selon cet axe normal A3, de manière que le mouvement de la partie centrale par rapport à la partie périphérique de l'assise 10 est non pas circulaire mais hélicoïdal autour de l'axe normal A3.

Ainsi, lorsque la partie centrale 10A de l'assise 10 pivote depuis sa position d'utilisation face à la route vers sa position de côté face à la portière, elle monte également. Cette élévation facilite l'entrée de l'usager dans le véhicule et sa sortie.

Pour assurer ce mouvement hélicoïdal, trois rainures hélicoïdales sont prévues en creux dans la face externe cylindrique du support tubulaire 116. L'embase 117 porte en correspondance trois pieds en saillie vers le bas, sur lesquels sont montés des galets engagés dans les rainures hélicoïdales. Ces galets sont rotatifs et prévus pour naviguer dans ces rainures afin de guider la partie centrale de l'assise lorsqu'elle pivote par rapport à la partie périphérique.

Il est également prévu des moyens de verrouillage de cette mobilité, qui sont rappelés dans un état verrouillé dans lequel ils bloquent la partie centrale par rapport à la partie périphérique, et qui peuvent être déplacés dans un état déverrouillé dans lequel ils libèrent la mobilité en rotation de la partie centrale par rapport à la partie périphérique. Ces moyens de verrouillage comportent par exemple un ergot qui est monté mobile sur l'embase 117 et qui est adapté à s'engager dans une ouverture prévue dans le support tubulaire 116 pour bloquer le siège en position d'utilisation face à la route. Un levier 25 agencé sur le dossier pourra, à l'aide d'un câble, permettre à l'usager de manoeuvrer l'ergot pour le sortir de l'ouverture et libérer la rotation de la partie centrale.

Le dossier 20 est identique dans les deux modes de réalisation précités.

Son ossature 21 présente une forme de cadre à quatre branches structurelles, avec deux flancs 210 latéraux (formant deux premières branches) se présentant ici sous la forme de plaques sensiblement planes, orientées verticalement et longitudinalement, et des traverses supérieure 211 et inférieure 212 qui relient les deux flancs 210.

Comme cela a été expliqué supra, le dossier 20 est monté sur l'assise 10 de façon à pouvoir basculer par rapport à cette dernière autour d'un axe de rotation A1, entre une configuration d'utilisation et une configuration couchée.

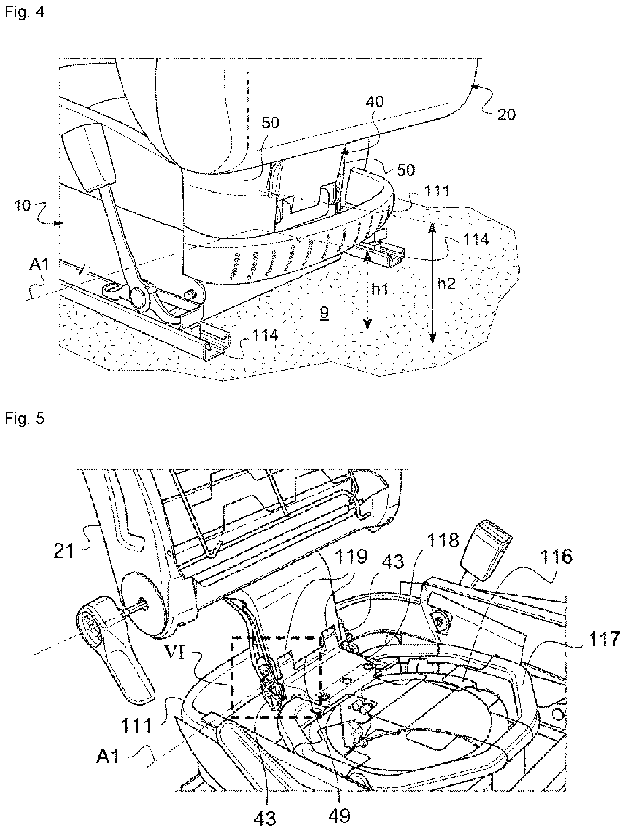

Cet axe de rotation A1 est situé sous la face supérieure de la garniture 12 de l'assise 10. Autrement formulé, comme le montre la figure 4, la hauteur h1 de l'axe de rotation A1 par rapport au plan de fixation est inférieure à la hauteur h2 de la face supérieure de la garniture 12 de l'assise 10, au moins au niveau du bord arrière de l'assise (et de préférence en tout point de la face supérieure de l'assise). Ainsi, en configuration couchée, le dossier 20 peut se placer dans le prolongement de l'assise 10 (avec leurs garnitures à la même hauteur). Cet axe de rotation A1 est en outre situé à l'intérieur du cadre délimité par l'ossature 11 de l'assise 10. Autrement formulé, il est situé entre les traverses avant et arrière 111. Ainsi, lorsque le dossier bascule vers l'arrière, sa garniture ne s'écarte pas de celle de l'assise, ce qui évite qu'un vide ne se crée entre elles.

En pratique, les moyens de montage du dossier 20 sur l'assise 10 comprennent un bras de liaison 40 dont une extrémité est montée sur l'ossature 11 de l'assise 10 de façon à former une première articulation autour de l'axe de rotation A1.

Ce bras de liaison 40 se présente sous la forme d'une plaque de largeur sensiblement constante, incurvée vers l'arrière du côté de son extrémité supérieure (en « col de cygne »). Cette forme permet au siège, en configuration couchée, de présenter une bonne planéité. Dans le mode de réalisation de la figure 2, le bras de liaison 40 est monté plus précisément sur la traverse intermédiaire 113 de l'ossature 11 de l'assise 10.

Dans le mode de réalisation de la figure 3, le bras de liaison 40 est monté sur l'embase 117 de la partie centrale de l'ossature 11 de l'assise 10. Dans ce mode, il est donc conçu de façon à passer entre la garniture de la partie périphérique et la garniture de la partie centrale de l'assise 10 lorsque ces dernières pivotent l'une par rapport à l'autre.

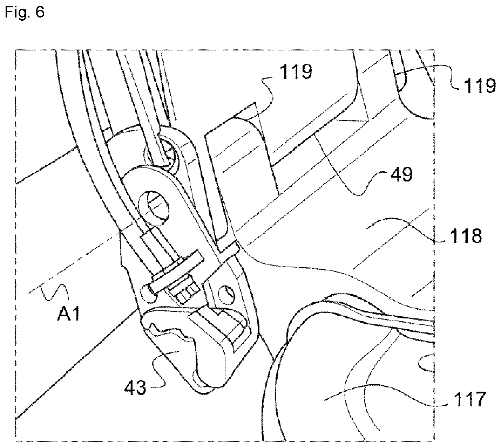

Dans ces deux modes, comme le montrent par exemple les figures 5 et 6 (correspondant au second mode), l'ossature 11 de l'assise 10 comporte une plaque d'attache 118 sensiblement horizontale, dont le bord arrière porte deux ergots 119 situés en saillie de la face supérieure de cette plaque, vers le haut, à distance l'un de l'autre.

Ces deux ergots 119 sont percés par des trous s'étendant selon l'axe de rotation A1.

De son côté, l'extrémité basse du bras de liaison 40 porte un ergot 49 également percés par un trou s'étendant selon l'axe de rotation A1. Cet ergot 49 est prévu pour se placer entre les deux ergots précités 119.

Un arbre enfilé dans les trois trous permet de guider le mouvement de basculement de l'assise autour de l'axe de rotation A1 (cet arbre formant avec les ergots une charnière. Cette première articulation permet donc de basculer le dossier 20 vers l'arrière, dans le prolongement de l'assise (dans la configuration couchée), pour que l'occupant puisse se coucher sur son siège 1.

Des moyens de blocage permettent de bloquer l'articulation, et des moyens de désactivation permettent de libérer au besoin cette articulation pour coucher le dossier ou le ramener en position d'utilisation.

En pratique, les moyens de blocage comportent deux cassettes 43 fixées de part et d'autre du bras de liaison 40.

Ces cassettes 43 logent chacune un verrou (non visible) qui est monté mobile dans celle-ci entre une position engagée dans une (ou plusieurs) encoche(s) prévue(s) en correspondance dans l'ossature 11 de l'assise 10 et une position rétractée en dehors de chaque encoche. En position engagée, les verrous bloquent donc le basculement du dossier, ce qui n'est pas le cas lorsqu'ils sont en position rétractée.

Un moyen de rappel, tel qu'un ressort, permet de maintenir les moyens de blocage à l'état activé (c'est-à-dire les verrous en position engagée).

Les moyens de désactivation comportent alors un levier 24 agencé sur le dossier (ici en haut du dossier, comme le montrent les figures 2 et 3), et un système de câbles permettant de tirer les verrous hors de leurs orifices.

Le système employé entre le câble et le verrou correspondant pour faire coulisser le verrou hors de l'encoche lorsqu'un usager tire sur le levier pourrait se présenter sous des formes diverses.

A titre d'exemple, il pourrait comporter une plaque basculante montée libre en rotation autour d'un axe transversal. Cette plaque présenterait alors une ouverture allongée ayant une fonction de « chemin de came ». Le verrou serait quant à lui équipé d'un ergot adapté à naviguer dans cette ouverture. De cette façon, lorsque le levier serait tiré, la plaque basculerait et forcerait le verrou à coulisser en position rétractée.

Comme le montre la figure 4, le bras de liaison 40 présente une largeur inférieure ou égale à la moitié de la largeur hors-tout du siège 1. Il est en outre situé au milieu du bord arrière de l'assise 10.

La partie périphérique de la garniture de l'assise 10 est en outre interrompue à l'arrière (elle présente donc une forme de U avec un côté avant et deux côtés latéraux, mais pas de côté arrière).

Ainsi, deux espaces vides 50 sont laissées libres de part et d'autre de ce bras, entre les garnitures du dossier 20 et de l'assise 10. Ces espaces vides permettent au dossier de basculer sans interférer avec l'assise. Ils ouvrent en outre la vue que les passagers arrière du véhicule ont de l'avant de ce véhicule, ce qui rend cette vue moins oppressante. Ils permettent en outre aux passagers arrière de bénéficier de plus de place pour se servir de la traverse arrière 112 comme d'un repose-pieds.

Ce bras de liaison 40 pourrait être fixé à la traverse inférieure 212 de l'ossature 21 du dossier 20.

Toutefois, dans les modes de réalisation illustrés, il est au contraire articulé sur cette traverse. Cette seconde articulation forme une liaison pivot entre le bras de liaison 40 et la traverse inférieure 212 de l'ossature 21 du dossier 20, ce qui permet à l'usager de régler l'inclinaison du dossier lorsque le siège est en configuration d'utilisation. Des moyens de blocage permettent de bloquer cette seconde articulation, et des moyens de manoeuvre permettent de libérer au besoin cette articulation pour régler l'inclinaison du dossier. Un levier 26 agencé sur le dossier pourra permettre à l'usager d'actionner ces moyens de manoeuvre.

L'appui-tête 30 illustré sur la figure 1 est par ailleurs ici monté sur le dossier 20 avec deux degrés de mobilité. Il est ainsi adapté à coulisser selon un axe sensiblement parallèle à l'axe principal du dossier (de haut en bas). Il est également adapté à pivoter autour d'un axe de retournement sensiblement parallèle à l'axe principal du dossier.

L'appui-tête est alors adapté à pivoter sur une course d'au moins 180°, de façon à ce qu'il puisse être retourné.

Sa garniture 32 présente deux faces principales 321, 322 situées à l'opposé l'une de l'autre, qui peuvent chacune être orientées vers l'avant du dossier pour que la tête de l'occupant du siège s'y appuie.

Ces deux faces principales 321, 322 sont sensiblement planes. Elles s'étendent ainsi dans des plans sensiblement parallèles, qui sont écartés de l'axe de retournement de distances différentes.

La première face 321, lorsqu'elle est tournée vers l'avant, forme un renflement en saillie vers l'avant par rapport à la face avant du dossier (elle forme ainsi une marche au niveau de la jonction entre le dossier et l'appui-tête). Cette face de la garniture 32 est donc orientée vers l'avant lorsque le dossier est en position d'utilisation.

La seconde face 322, lorsqu'elle est tournée vers l'avant du dossier, s'étend sensiblement dans le prolongement de ce dossier. Cette face de la garniture 32 est donc orientée vers l'avant lorsque le dossier est en configuration couchée, de sorte que l'appui-tête ne gêne pas l'occupant pour dormir.

Comme le montre également la figure 1, l'appui-tête 30, lorsqu'il est en position basse, se loge dans une échancrure en creux dans le bord supérieur du dossier 20. Il est donc utilisable dans cette position par une personne de petite taille. Il est en revanche prévu pour s'écarter de cette échancrure vers le haut, pour s'adapter aux personnes de grandes tailles. Les moyens de montage de l'appui-tête 30 sur le dossier 20 permettant à l'appui-tête 30 de bénéficier des deux mobilités précitées pourraient se présenter sous diverses formes.

En pratique, pour offrir à l'appui-tête 30 une mobilité de coulissement de haut en bas, ils comportent un fourreau qui est fixé à l'ossature 21 du dossier 20, et une tige montée coulissante dans ce fourreau. En outre, il est prévu des moyens de blocage du coulissement de la tige dans son fourreau, qui sont désactivables

Pour offrir à l'appui-tête 30 une mobilité de pivotement autour de l'axe de retournement, les moyens de montage comportent un arbre cylindrique qui est fixé à la tige précitée et sur lequel une douille qui supporte l'ossature 31 de l'appui-tête 30 peut librement pivoter. Ils comportent aussi un système d'indexation permettant de bloquer la rotation de l'appui-tête 30 autour de l'axe de retournement dans deux positions stables. L'objectif est que seules les deux faces principales 321, 322 de la garniture 32 de l'appui-tête puissent être placées vers l'avant, face à la route. A titre d'exemple, en guide de moyens d'indexation, la face intérieure de la douille délimite un chemin de came dans lequel peut naviguer un pion latéral fixé à l'arbre. Un moyen de rappel de la douille vers le bas permet de ramener automatiquement le pion latéral au fond de l'une ou l'autre des extrémités du chemin de came, pour bloquer l'appui-tête.

La présente invention n'est nullement limitée aux modes de réalisation décrits et représentés, mais l'homme du métier saura y apporter toute variante conforme à l'invention. Typiquement, on pourrait prévoir que le bras de liaison soit télescopique. Ainsi, l'usager pourrait régler l'écart entre l'assise et le dossier (notamment en configuration couchée) en fonction de sa propre morphologie. Un système de crémaillère pourrait permettre de régler la longueur de ce bras.

## Revendications

1. Siège (1) comportant :
- une assise (10) qui comprend une ossature (11) et une garniture (12) ayant une face supérieure d'assise,
- des moyens de fixation de l'assise (10) sur un plancher (9),
- un dossier (20), et
- des moyens de montage du dossier (20) sur l'assise (10) avec une mobilité de basculement autour d'un axe de rotation (A1) sensiblement parallèle au plancher (9), **caractérisé en ce que** l'axe de rotation (A1) est situé à une hauteur (h1) par rapport au plancher (9) qui est inférieure à la hauteur (h2) de la face supérieure de la garniture (12) de l'assise (10) par rapport au plancher (9).

2. Siège (1) selon la revendication 1, dans lequel l'ossature (11) de l'assise (10) forme un cadre et ledit axe de rotation (A1) est situé à l'intérieur dudit cadre.

3. Siège (1) selon l'une des revendications 1 et 2, dans lequel lesdits moyens de montage comprennent un bras de liaison (40) dont une extrémité est montée sur l'ossature (11) de l'assise (10) de façon à former une première articulation autour de l'axe de rotation (A1).

4. Siège (1) selon la revendication 3, dans lequel ledit bras de liaison (40) s'étend sur moins de la moitié de la largeur du dossier (20).

5. Siège (1) selon l'une des revendications 3 et 4, dans lequel l'assise (10) comporte :
- une partie périphérique (10B) qui est équipée desdits moyens de fixation, et
- une partie centrale (10A) montée mobile en rotation par rapport à la partie périphérique (10B), et sur laquelle est articulée le bras de liaison (40).

6. Siège (1) selon la revendication 5, dans lequel une partie (12B) de la garniture (12) de l'assise (10) appartenant à la partie périphérique (10B) est située autour de la partie centrale (10A) et est interrompue au niveau du bras de liaison (40).

7. Siège (1) selon l'une des revendications 3 à 6, dans lequel ledit bras de liaison (40) présente une extrémité qui est montée sur une ossature (21) du dossier (20) de façon à former une seconde articulation autour d'un axe de pivotement (A2) qui est distinct de l'axe de rotation (A1) et qui est préférentiellement parallèle audit axe de rotation (A1).

8. Siège (1) selon l'une des revendications 3 à 7, dans lequel ledit bras de liaison est télescopique.

9. Siège (1) selon l'une des revendications 1 à 8, dans lequel il est prévu des moyens de blocage de la mobilité en basculement du dossier (20) autour dudit axe de rotation (A1), et des moyens de désactivation des moyens de blocage, qui comprennent un levier (24) prévu sur le dossier (20).

10. Siège (1) selon les revendications 3 et 9, dans lequel lesdits moyens de blocage comportent deux cassettes (43) fixées de part et d'autre du bras de liaison (40), qui comportent chacune un verrou mobile entre une position engagée dans un orifice prévu en correspondance dans l'ossature (11) de l'assise (10) et une position rétractée en dehors dudit orifice.

11. Véhicule automobile **caractérisé en ce qu'**il comporte un plancher (9) et au moins un siège (1) conforme à l'une des revendications 1 à 10, fixé sur le plancher (9).
